# EUROPEAN PATENT APPLICATION

(11) **EP 4 345 849 A1**
(43) Date of publication of application: **03.04.2024**
(21) Application number: 23200063.8
(22) Date of filing: 27.09.2023
(51) Int. Cl.: H01B 3/46, C08K 3/04, C08K 3/34, H02G 15/064

(54) **ELECTRICAL STRESS GRADING COMPOSITIONS AND DEVICES INCLUDING THE SAME**

(30) Priority: 29.09.2022 US 202217936780
(71) Applicant: TE Connectivity Solutions GmbH, 8200 Schaffhausen (CH); Tyco Electronics Raychem GmbH, 85521 Ottobrunn (DE); Tyco Electronics UK Ltd, Wiltshire SN3 5HH (GB)
(72) Inventor: Wang, Jian, Fremont, CA, 94555 (US); Wang, Xin, Fuquay-Varina, NC, 27526 (US); Kehl, Ladislaus, 85521 Ottobrunn (DE); Yaworski, Harry George, Fuquay-Varina, NC, 27526 (US); Lewington, Sean Michael, Dorcan, Swindon, SN3 5HH (GB); Bayes, Martin William, Fuquay-Varina, NC, 27526 (US)
(74) Representative: Grünecker Patent- und Rechtsanwälte PartG mbB

(57) **Abstract**

Provided according to embodiments of the invention are electrical stress grading compositions that include a polymer, inorganic nanoplatelets, and inorganic filler particles, wherein the inorganic nanoplatelets and the inorganic filler particles are dispersed in the polymer. Also provided are electrical devices that include such electrical stress grading compositions including, for example, power cable accessories, insulators, bushings, and surge arrestors. Further provided according to embodiments of the invention are methods of forming electrical stress grading compositions.

## Description

The present invention relates to electrical stress grading compositions and uses thereof. The present invention further relates to medium-voltage (MV) and high-voltage (HV) power cables and accessories, as well as other devices that may benefit from the use of an electrical stress grading composition.

In the electrical utilities industry, maintaining cable integrity may be critical. A loss of cable integrity, for example, a short circuit in a high voltage cable, may result in a crippling power outage or, even worse, a loss of life. One everyday task that may pose a great threat to cable integrity is the formation of electrical connections. When electrical connections are formed, a bare metal surface may be exposed. If the connection is made between two insulated cables, it may be necessary to effectively rebuild the cable's electrical insulation, metallic shield, and environmental protection over this connection. Additionally, when a power cable is terminated, the termination may create an abrupt discontinuity in the electrical characteristics of the cable. This discontinuity may change the shape of the resulting electrical field and thus, the concentration of electrical field stress, which may increase the risk of the cable insulation breaking down. To address this problem, terminations are commonly provided with stress control elements and/or materials that grade the electric field from a shielded cable part to a cable part in which the original shield has been removed. Using capacitive grading materials is one method to control or shift the electrical field so that the equipotential stress field can be evenly distributed over the connection region.

Capacitive grading materials may also be useful in other applications in which an insulating material is used between a medium-voltage or high-voltage conductor and a grounded conductor. Such configurations may be seen, for example, in insulators, bushings, and surge arrestors. Capacitive grading materials that have desirable capacitative properties as well as desirable mechanical properties are needed for use in such devices.

Provided according to some embodiments of the present invention are electrical stress grading compositions that include a polymer, inorganic nanoplatelets, and inorganic filler particles, wherein the inorganic nanoplatelets and inorganic filler particles are dispersed in the polymer. In some embodiments of the invention, the inorganic nanoplatelets have an aspect ratio of at least about 100, and in some embodiments, the inorganic filler particles have a diameter in a range of about 10 nm to about 50 µm. In some embodiments, the inorganic nanoplatelets include graphene, graphene oxide, and/or functionalized graphene. In some embodiments, the inorganic filler particles include SiC and/or one or more metal oxide(s) such as, for example, ZnO, FeO₂, TiO₂, Al₂O₃, BaTiO₃, SnO₂, SbO₂, Ba₁₋ₓSrₓTiO₃ (BST), Pb(Zr, Ti)Os (PZT), SrBi₂Ta₂O₉ (SBT), or LiNbO₃ (LNO), or a combination of any of the foregoing. In particular embodiments, the polymer is an electrically insulating polymer, such as a liquid silicone polymer.

According to some embodiments of the invention, the electrical stress grading composition includes inorganic nanoplatelets at a concentration in a range of about 0.1% to about 2% by volume of the composition. In some embodiments, the electrical stress grading composition includes inorganic filler particles at a concentration in a range of about 5% to about 30% by volume (e.g., about 5% to about 20% by volume) of the composition.

According to some embodiments of the invention, the electrical stress grading composition has a dielectric constant (Dk) in a range of about 5 to about 50 (e.g., in a range of about 5 to about 20). In some embodiments, the electrical stress grading composition has a dissipation factor (Df) of less than about 70%, less than about 60%, less than about 50%, less than about 40%, less than about 30%, less than about 20%, less than about 10%, or less than about 5%. In some embodiments, the electrical stress grading composition has a volume resistivity above about 1 × 10⁷ Ω·cm.

In some embodiments of the invention, the electrical stress grading composition is present as a molded or extruded article (e.g., a layer, tubular layer or sleeve) and in some embodiments, the electrical stress grading composition is present as a flowable conformable medium (e.g., a mastic).

Also provided according to embodiments of the invention are electrical devices that include an electrical stress grading composition of the invention and an insulating material positioned between a medium-voltage or high-voltage conductor and a grounded conductor. For example, provided according to embodiments of the invention are power cable accessories, insulators, bushings, and surge arrestors that include an electrical stress grading composition of the invention.

In some embodiments, a power cable accessory includes a tubular, electrically insulating layer and a tubular stress control layer or body integrally molded or extruded with the electrically insulating layer, wherein the stress control layer includes or is formed from an electrical stress grading composition of the invention. Also provided according to embodiments of the invention are methods of preparing an electrical cable that include applying an electrical stress grading composition of the invention onto the electrical cable.

Further features, advantages, and details of the present invention will be appreciated by those of ordinary skill in the art from a reading of the figures and the detailed description of the embodiments that follow, such description being merely illustrative of the present invention. It is noted that aspects of the invention described with respect to one embodiment, may be incorporated in a different embodiment although not specifically described relative thereto. That is, all embodiments and/or features of any embodiment can be combined in any way and/or combination. These and other objects and/or aspects of the present invention are explained in detail in the specification set forth below.

The invention will now be described by way of example with reference to the accompanying drawings in which:
**FIG. 1** is a side cross-sectional schematic view of a power cable prepared to receive a termination or connection.
**FIG. 2** is a side cross-sectional schematic view of the power cable of **FIG. 1****,** further including an electrical stress grading composition of the invention.
**FIG. 3** is a side cross-sectional schematic of the power cable of **FIG. 1****,** further including an electrical stress grading composition of the invention and a stress cone.
**FIG. 4** is a side cross-sectional schematic of the power cable of **FIG. 1****,** further including an electrical stress grading composition of the invention and a stress cone.
**FIG. 5** is a side cross-sectional schematic of a cover assembly unit of an embodiment of the invention.
**FIG. 6** is a side cross-sectional schematic of a connection assembly formed from the cover assembly unit in **FIG. 5****.**
**FIG. 7** is a side cross-sectional schematic of a cover assembly unit of an embodiment of the invention.
**FIG. 8** is a side cross-sectional schematic of a connection assembly formed from the cover assembly unit in **FIG. 7****.**
**FIG. 9** provides SEM images of graphene nanoplatelets (GNP) used in the stress grading compositions tested in Examples 3-5.
**FIG. 10A** is a graph showing the average dielectric constant (Dk) at 60 Hz as a function of the GNP concentration (from 0 to 2% by volume) for compositions that include GNP dispersed in a liquid silicone rubber. **FIG. 10B** is a graph showing the average dissipation factor (Df) as a function of the GNP concentration (from 0 to 2% by volume) for compositions that include GNP dispersed in a liquid silicone rubber.
**FIG. 11A** is a graph showing the average dielectric constant (Dk) at 60 Hz as a function of the GNP concentration (from 0 to 2% by volume) for compositions that includes GNP and barium titanate (BTO) particles (at 10% by volume) dispersed in a liquid silicone rubber. **FIG. 11B** is a graph showing the average dissipation factor (Df) at 60 Hz as a function of the GNP concentration (from 0 to 2 % by volume) for compositions that include GNP and barium titanate (BTO) particles (at 10% by volume) dispersed in a liquid silicone rubber.

The accompanying figures are included to provide a further understanding of the present invention and are incorporated in and constitute a part of this specification. The drawings illustrate some embodiments of the present invention and, together with the description, serve to explain principles of the present invention.

The present invention is now described more fully hereinafter with reference to the accompanying drawings, in which embodiments of the invention are shown. This invention may, however, be embodied in many different forms and should not be construed as limited to the embodiments set forth herein; rather these embodiments are provided so that this disclosure will be thorough and complete and will fully convey the scope of the invention to those skilled in the art.

The terminology used herein is for the purpose of describing particular embodiments only and is not intended to be limiting of the invention. As used herein, the singular forms "a," "an" and "the" are intended to include plural forms as well, unless the context clearly indicates otherwise. It will be further understood that the terms "comprises" or "comprising," when used in this specification, specify the presence of stated features, integers, steps, operations, elements components and/or groups or combinations thereof, but do not preclude the presence or addition of one or more other features, integers, steps, operations, elements, components and/or groups or combinations thereof.

As used herein, the term "and/or" includes any and all possible combinations or one or more of the associated listed items, as well as the lack of combinations when interpreted in the alternative ("or").

Unless otherwise defined, all terms (including technical and scientific terms) used herein have the same meaning as commonly understood by one of ordinary skill in the art to which this invention belongs. It will be further understood that terms, such as those defined in commonly-used dictionaries, should be interpreted as having a meaning that is consistent with their meaning in the context of the specification and claims and should not be interpreted in an idealized or overly formal sense unless expressly so defined herein. Well-known functions or constructions may not be described in detail for brevity and/or clarity.

It will be understood that when an element is referred to as being "on," "attached" to, "connected" to, "coupled" with, "contacting," etc., another element, it can be directly on, attached to, connected to, coupled with and/or contacting the other element or intervening elements can also be present. In contrast, when an element is referred to as being, for example, "directly on," "directly attached" to, "directly connected" to, "directly coupled" with or "directly contacting" another element, there are no intervening elements present. It will also be appreciated by those of skill in the art that references to a structure or feature that is disposed "adjacent" another feature can have portions that overlap or underlie the adjacent feature.

Spatially relative terms, such as "under," "below," "lower," "over," "upper" and the like, may be used herein for ease of description to describe an element's or feature's relationship to another element(s) or feature(s) as illustrated in the figures. It will be understood that the spatially relative terms are intended to encompass different orientations of the device in use or operation in addition to the orientation depicted in the figures. For example, if the device in the figures is inverted, elements described as "under" or "beneath" other elements or features would then be oriented "over" the other elements or features. Thus, the exemplary term "under" can encompass both an orientation of over and under. The device may otherwise be oriented (rotated 90 degrees or at other orientations) and the spatially relative descriptors used herein interpreted accordingly. Similarly, the terms "upwardly," "downwardly," "vertical," "horizontal" and the like are used herein for the purpose of explanation only, unless specifically indicated otherwise.

It will be understood that, although the terms first, second, etc., may be used herein to describe various elements, components, regions, layers and/or sections, these elements, components, regions, layers and/or sections should not be limited by these terms. Rather, these terms are only used to distinguish one element, component, region, layer and/or section, from another element, component, region, layer and/or section. Thus, a first element, component, region, layer or section discussed herein could be termed a second element, component, region, layer or section without departing from the teachings of the present invention. The sequence of operations (or steps) is not limited to the order presented in the claims or figures unless specifically indicated otherwise.

As used herein, the term "about," when referring to a measurable value, such as an amount or concentration or the like, is meant to refer to a variation of up to ± 20% of the specified value, such as but not limited to, ± 10%, ± 5%, ± 1%, ± 0.5%, or ± 0.1 of the specified value and including the specified value. For example, "about X" where X is a measurable value, is meant to include X as well as variations of ± 20%, ± 10%, ± 5%, ± 1%, ± 0.5%, or ± 0.1 of X.

### Electrical Stress Grading Compositions

Provided according to embodiments of the present invention are electrical stress grading compositions that include a polymer, inorganic nanoplatelets, and inorganic fillers particles, wherein the inorganic nanoplatelets and inorganic filler particles are dispersed in the polymer.

As used herein, the term "inorganic nanoplatelets" refers to a so-called "two-dimensional" inorganic material having a thickness in a range of about 0.35 nm to about 20 nm and an aspect ratio of at least about 100. The aspect ratio, defined herein as the major dimension (length) divided by (÷) the minor dimension (thickness), may be varied and may be in a range of about 100 to about 100,000 or more. In some embodiments, the inorganic nanoplatelets have an aspect ratio in a range of about 100, 200, 300, 400, 500, 600, 700, 8000, 9000, 1000, 5,000, 10,000, 15,000, or any range defined therein. In some embodiments, the inorganic nanoplatelets have a thickness in a range of about 1 nm to about 15 nm (e.g., about 10 nm to about 15 nm). The inorganic nanoplatelets may otherwise be uniformly or irregularly shaped. The inorganic material of the nanoplatelets may also be varied. In some embodiments, the nanoplatelets include graphene, graphene oxide, functionalized graphene, or any combination thereof. In some embodiments, the inorganic nanoplatelets are present in the electrical stress grading composition at a concentration in a range of about 0.1% to about 2% by volume of the composition, including about 0.1, 0.2, 0.3, 0.4, 0.5 0.6, 0.7, 0.8, 0.9, 1.0, 1.1, 1.2, 1.3, 1.4, 1.5, 1.6, 1.7, 1.8, 1.9, 2.0% by volume, or any range defined therein. As used herein, the "volume %" of the inorganic nanoplatelets refers to the volume of the inorganic nanoplatelets relative to the total volume of the composition, including any other inorganic components.

As used herein, the term "inorganic filler particles" refers to inorganic particles having a major dimension (also referred to herein as a "diameter") in a range of about 10 nm to about 50 µm (e.g., about 50 nm to about 2 µm). The inorganic filler particles may be generally or substantially spherical but other particle shapes, including irregularly-shaped particles, may be included. The inorganic material included in the inorganic filler particles may be varied. For example, the inorganic filler may include, but is not limited to, SiC and/or one or more metal oxide(s), such as, but not limited to, ZnO, FeO₂, TiO₂, Al₂O₃, BaTiO₃, SnO₂, SbO₂, Ba₁₋ₓSrₓTiO₃ (BST), Pb(Zr, Ti)Os (PZT), SrBi₂Ta₂O₉ (SBT), LiNbO₃ (LNO), or any combination of the foregoing. In particular embodiments, the inorganic filler includes BaTiO₃, Ba₁₋ₓSrxTiO₃, or a composite of BaTiO₃ and/or Ba₁₋ₓSrₓTiO₃ and graphene. In some embodiments, the inorganic filler particles are present in the composition at about 5% to about 30% by volume of the composition, including 5, 6, 7, 8, 9, 10, 11, 12, 13, 14, 15, 16, 17, 18, 19, 20, 25, 30% by volume, including any range defined therein. As used herein, the "volume %" of the inorganic filler particles refers to the volume of the inorganic filler particles relative to the total volume of the composition, including any other inorganic components.

A variety of polymers may be used in the electrical stress grading compositions of the invention. A combination of different types of polymers may also be used. In some embodiments, the polymer may include one or more electrically insulating polymer(s) (e.g., a polymer having a volume resistivity of at least 1 × 10⁷ Ω·cm). Examples of polymers that may be included in electrical stress grading compositions of the invention include, but are not limited to, thermoplastic polymers, including thermoplastic polyolefins and/or elastomers, silicones (e.g., a liquid silicone rubber), rubbers, including ethylene propylene diene monomer (EPDM) rubbers, ethylene propylene rubber (EPR), EPDM-Si copolymers or blends, casting resins, including epoxies, polyurethane resins, and any combination thereof. The molecular weight and/or polymer composition may be varied to provide the desired physical properties including, but not limited to, viscosity, modulus, tensile strength, elongation, durometer hardness, tear strength, tension set, flexibility, and water absorption.

In some embodiments, the inorganic nanoplatelets and the inorganic filler particles are uniformly dispersed in the polymer, which may provide an intercalation-type effect.

The electrical stress grading compositions of the invention may have desirable electrical stress grading properties. In some embodiments, the electrical stress grading composition has a dielectric constant (Dk, or relative permittivity) in a range of about 5 to about 50 (e.g., about 5 to about 20), for example, as determined by ASTM D150. In some embodiments, the electrical stress grading composition has a dissipation factor (Df) of less than about 70%, less than about 60%, less than about 50%, less than about 40%, less than about 30%, less than about 20%, less than about 10%, or less than about 5%, for example, as determined by ASTM D150. In some embodiments, the electrical stress grading composition has a volume resistivity above about 1 × 10⁷ Ω·cm. Further, in some embodiments, the dielectric breakdown strength is in a range of about 5 kV/mm to about 50 kV/mm, for example as measured by ASTM D149. In some embodiments, such electrical stress grading properties are measured at a frequency of about 50 Hz to about 60 Hz.

In some embodiments of the invention, the electrical stress grading composition may be formed into a molded or extruded part or layer. For example, in some embodiments, the electrical stress grading composition has a modulus at 100% elongation (M100) in a range of from about 0.2 to about 2.0 MPa. In some embodiments, the electrical grading composition of the invention has one or more of the properties (e.g., all of the properties) shown in **Table 1**, as determined by the stated ASTM method. Such compositions may be particularly useful as molded or extruded parts/sleeves for use in power cables and/or accessories.

| **Table** 1 | | |
|---|---|---|
| **Test** | **Test method** | **Result/Properties** |
| **Dielectric constant** | ASTM D150 | ≥ about 30 for 35 kV |
| | | about 60 to about 70 for 72kV (e.g., in a range of about 30 to about 100) |
| **Dissipation Factor** | ASTM D150 | < about 10% (e.g., less than 5%) |
| **Dielectric breakdown strength 2mm wall thickness (kV/mm)** | ASTM D149 | ≥ about 12.0 for 35 kV (e.g., in a range of about 12 to about 50 kV/mm) |
| **Tensile Strength (MPa)** | DIN 53 504 S2 | ≥ about 6 |
| **Elongation (%)** | DIN 53 504 S2 | > about 420% including safety margin |
| **Durometer Hardness Shore A** | DIN 53 505 | about 30 to about 50 |
| **Tear strength (N/mm)** | ASTM D624 Die B | ≥ about 18 |
| **Tension set (%) (for cold-shrink insulation body)** | | about 20% to about 25% for 2 yrs at 40 °C: 3.5x the original diameter/dimension |

In some embodiments of the invention, the electrical stress grading composition is present as a flowable conformable medium (e.g., a void-filling mastic). In some embodiments, the electrical grading composition of the invention has one or more of the following properties (e.g., all of the properties) shown in **Table 2,** as determined by the stated ASTM method.

| **Table 2** | | |
|---|---|---|
| **Test** | **Test Method** | **Result/properties** |
| **Low temperature flexibility - 4hr at -40±3 °C** | ASTM D746 | No cracking |
| **Water absorption - 24hr at 23±2°C** | ASTM D570 | about 0.5% maximum |
| **Dielectric constant** | ASTM D150 | ≥ about 8 |
| **Dissipation factor** | ASTM D150 | < about 10% (e.g., less than 5%) |
| **Dielectric strength** | ASTM D149 | ≥ about 8kV/mm (e.g., 8 kV/mm to 30 kV/mm at 2mm wall thickness |

### Devices including Electrical Stress Grading Compositions

The electrical stress grading composition of the invention may have a number of different uses. For example, in some embodiments, provided is a power cable accessory that includes an electrical stress grading composition of the invention. In some embodiments, the power cable accessory is a medium-voltage (MV; 1000 V to 35 kV) or high-voltage (HV; over 35 kV) power coaxial cable accessory, as defined by IEC 60038. In some embodiments, the electrical stress grading composition in the power cable accessory may be configured to be attached or adjacent to a terminal edge of a semiconductive layer in a power cable. Further, according to some embodiments, the power cable accessory includes a tubular, electrically insulating layer and a tubular stress control layer or body integrally molded with the electrically insulating layer or insulation body, wherein the stress control layer or body is formed of an electrical stress grading composition of an embodiment of the invention. In some embodiments, the electrical stress grading composition is adjacent to or surrounds a geometric stress relief element such as a stress cone. Also provided according to embodiments of the invention are methods of preparing an electrical cable that include applying an electrical stress grading composition of the invention onto the electrical cable.

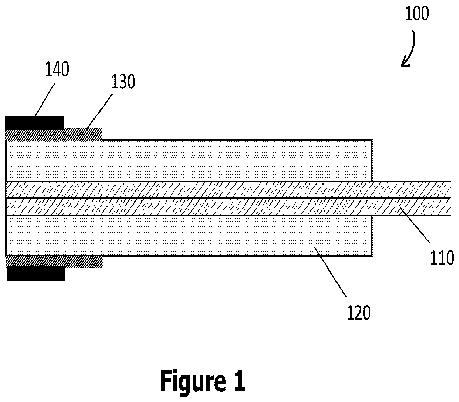

Reference is now made to **FIG. 1****,** which is a side cross-sectional schematic of an electric power cable **100** that is prespared to receive a cable termination or connection. In some embodiments, the electric power cable **100** includes a primary electrical conductor **110,** a polymeric insulation layer **120,** a semiconductor layer **130,** and an electromagnetic radiation shield layer **140,** with each component being concentrically surrounded by the next. According to some embodiments, the electromagnetic shield layer **140** includes a metal tape, foil, strip, or sheath wrapped or wound about (e.g., circumferentially or helically) about and fully circumferentially surrounding the semiconductor layer **140** along the length of the cable **100** and about a center axis of the cable that corresponds to the longitudinal center of the primary electrical conductor **110,** for example.

The primary electrical conductor **110** may be formed of any suitable electrically conductive material(s), including but not limited to, copper (solid or stranded). The polymeric insulation layer **120** may be formed of any suitable electrically insulative material(s), including but not limited to, crosslinked polyethylene (XLPE) and/or ethylene propylene rubber (EPR). The semiconductor layer **130** may be formed of any suitable semiconductor material(s), including but not limited to, carbon black in silicone. In some embodiments, the semiconductor layer **130** has a thickness in a range of from about 0.030 to about 0.070 inch, but other thicknesses may be used. The electromagnetic shield layer **140** may be formed from any suitable material(s), including but not limited to, copper. In some embodiments, a jacket (not shown) may be layered on the electromagnetic shield layer **140** and may be formed of any suitable material, including but not limited to, EPDM rubber or PVC. Further, in some embodiments, an additional semiconductor layer (not shown) is present between the primary electrical conductor **110** and the polymeric insulation layer **120.** In **FIG. 1****,** a portion of the shield layer **140** and the semiconductor layer **130** have been removed due to termination (or splicing).

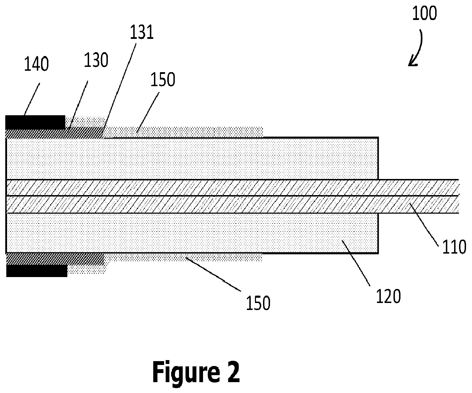

**FIG. 2** is a side cross-sectional schematic of the electric power cable **100** from **FIG. 1****,** wherein an electrical stress grading composition **150** of the invention has been applied to the cable **100.** The electrical stress grading composition **150** may be introduced around the unshielded portion of the cable **100** and in electrical contact with the shield layer **140.** In some embodiments, the electrical stress grading composition **150** may cover only a portion of the semiconductor layer **130** and a portion of the insulation layer **120** on either side of the terminal edge **131** of the semiconductor layer **130.** In some embodiments, the electrical stress grading composition **150** covers the terminal edge **131** of the semiconductor layer **130** and it may also extend axially beyond the terminal edge **131** in both directions. In some embodiments, the electrical stress grading composition **150** may cover all of the insulation layer **130.**

In some embodiments, the electrical stress grading composition **150** may be present as a flowable conformable medium that may be positioned into place about the polymeric insulation layer **120** and the semiconductor layer **130.** For example, in particular embodiments of the invention, the electrical stress grading composition **150** is a cold-applied flowable medium that is applied (e.g., wrapped) about the cable **100** in the desired regions (e.g., adjacent to and/or covering the semiconductor **130).** In other embodiments, the electrical stress grading composition **150** is a molded component (e.g., a sleeve) that is slipped over the cable **100,** either as a stand-alone component or part of a multi-element component or accessory. In some embodiments, the electrical stress grading composition **150** is a hot melt medium (e.g., a hot melt adhesive) that is applied onto the cable **100.** The hot melt then may be heated (e.g., with a heat gun) allowing it to flow into and onto the cable **100** until it cools to a more viscous or solid state.

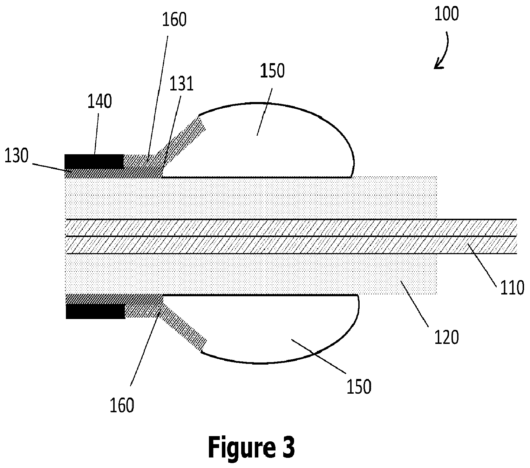

As shown in **FIG. 3****,** in some embodiments, the power cable may further include an additional stress control element to smooth the abrupt change in electrical field at the unshielded portion of the termination. In some embodiments, the stress control element is a geometric stress relief element such as, for example, a stress cone **160.** The stress cone **160** may be a layer that is a generally tubular sleeve that extends axially. The stress cone **160** may be formed of a suitably electrically conductive, elastically expandable material. In some embodiments, the stress cone is formed of a material having a modulus at 100 percent elongation (M100) in a range of from about 0.15 to about 0.90 MPa. In some embodiments, the stress cone **160** is formed of an elastomeric material including, but not limited to, liquid silicone rubber, EPDM rubber, EPR rubber, or any combination thereof.

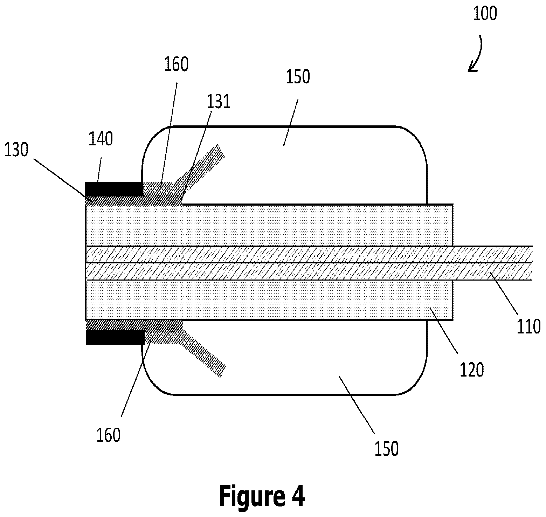

In some embodiments, as shown in **FIG. 3** and in **FIG. 4****,** an electrical stress grading composition **150** of the invention may be used in combination with a geometric stress relief element such as a stress cone **160.** As shown in **FIG. 3****,** in some embodiments, the electrical stress grading composition **150** may be adjacent to a portion of the stress cone **160** (or other geometric stress relief element), and optionally surrounds and engages an exposed portion of the polymeric insulation layer **120.** As shown in **FIG. 4****,** in some embodiments, the electrical stress grading composition **150** may surround all of the stress cone **160** (or other stress relief element), and optionally at least a portion of the polymeric insulation layer **120.**

As shown in **FIG. 3** and **FIG. 4****,** in some embodiments, even with the stress cone **160,** the electrical stress grading composition **150** may be engaged with the cable **100** at a terminal edge **131** of the semiconductor layer **130.**

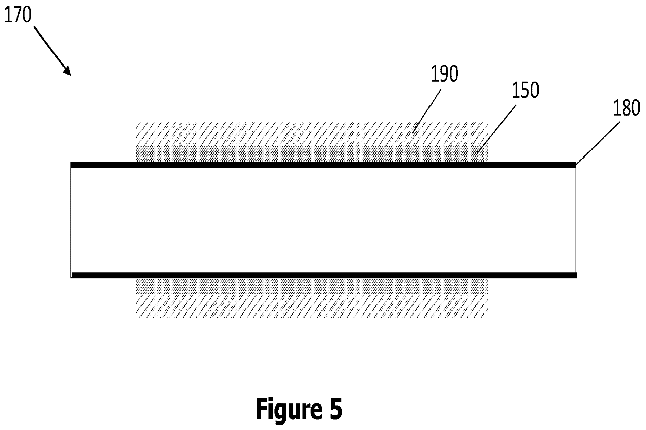

Referring to **FIG. 5****,** also provided according to embodiments of the invention is a cable accessory that includes a cover assembly unit **170** (e.g., a pre-expanded cover assembly unit) and removable holdout **180.** In some embodiments, the cover assembly unit **170** includes an electrical stress grading composition of the invention **150,** for example, as a molded or extruded sleeve or a layer of a flowable conformable medium. In some embodiments, the electrical stress grading composition **150** may be on and/or around the removable holdout **180.** In some embodiments, the cover assembly unit **170** includes an insulation sleeve or layer **190** on and/or around the electrical stress grading composition **150.** Further layers, including, for example, an additional semiconductor layer (not shown) may be present on and/or around the insulation sleeve or layer **190.** Further elements, materials, and processes that may be used to form the cover assembly unit **170** are described in U.S. Patent No. 9,780,549, which is hereby incorporated by reference in its entirety. The cover assembly unit **170** (also referred to as a joint body) may be deployed and mounted on the intended substrate in a retracted state or position. In some embodiments, the cover assembly unit **170** is a cold shrink cover, meaning that it can be shrunk or retracted about the substrate without requiring the use of applied heat.

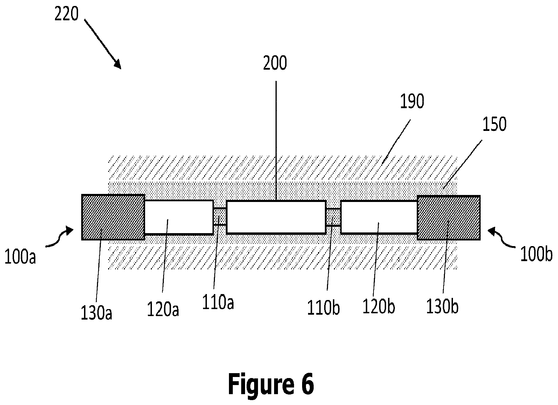

Once the cover assembly unit **170** is applied over a splice connection, it may be referred to as a connection assembly. Referring to **FIG. 6****,** the connection assembly **220** may be applied over a splice connection **200** between a pair of electrical power transmission cables **100a, 100b.** A first cable **100a** may include a primary electrical conductor **110a,** a polymeric insulation layer **120a,** and a semiconductor layer **130a,** and a second cable **100b** may include a primary electrical conductor **110b,** a polymeric insulation layer **120b,** and a semiconductor layer **130b.** Additional layers and elements, including an electromagnetic shield layer and a jacket, may also be present in the first cable **100a** and/or the second cable **100b,** but are omitted from **FIG. 6** for simplicity. In some embodiments, the electrical stress grading composition **150** separates from the removeable holdout **180** (not present in **FIG. 6****)** and becomes sandwiched between the insulation layer **190** and the cables **100a** and **100b** and directly engages the interface surfaces of cables **100a** and **100b.** Further elements, materials, and processes that may be used to form the connection assembly **220** are described in U.S. Patent No. 9,780,549.

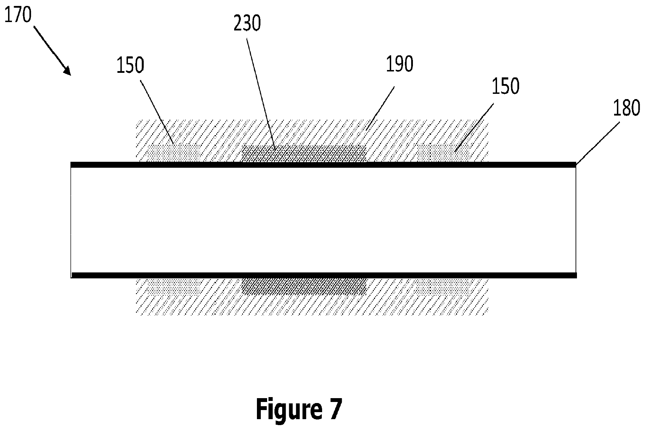

Referring to **FIG. 7****,** in other embodiments of the invention the cover assembly unit **170** (e.g., a pre-expanded cover assembly unit) may include the electrical stress grading composition **150** as an integrally molded part(s), for example, of an elastomeric insulation layer **190.** In some embodiments, the elastomeric insulation layer **190** may be on and/or around a removable holdout **180.** In some embodiments, one or more portions of the elastomeric insulation layer **190** may include a molded electrical stress grading composition **150** disposed therein. In **FIG. 7****,** the cover assembly unit **170** includes an electrical stress grading composition **150** positioned within the elastomeric insulation layer **190** and, in some embodiments, adjacent to or surrounding a geometric stress grading element (e.g., a stress cone, not shown). In some embodiments, the geometric stress grading element is further integrally molded into the elastomeric insulation layer **190.** The cover assembly unit **170** may also include one or more Faraday cage elements **230** integrally molded in the elastomeric insulation layer **190** that may be on and/or adjacent to the splice connection between a pair of electrical power transmission cables. Such Faraday cage element(s) **230** may be formed from a number of possible materials known in the art, including elastomeric polymers.

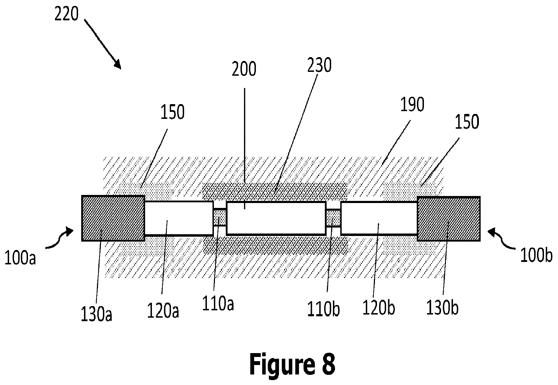

Referring to **FIG. 8****,** the connection assembly **220** formed from the cover assembly unit in **FIG. 7** may be present on and/or around the splice connection **200** between a pair of electrical power transmittion cables **100a, 100b.** As with the connection assembly in **FIG. 6****,** the first cable **100a** may include a primary electrical conductor **110a,** a polymeric insulation layer **120a,** and a semiconductor layer **130a,** and a second cable **110b** may include a primary electrical conductor **110b,** a polymeric insulation layer **120b,** and a semiconductor layer **130b.** Additional layers and elements, including an electromagnetic shield layer and a jacket, may also be present in the first cable **100a** and/or the second cable **100b,** but are omitted from **FIG. 8** for simplicity. The cover assembly unit of **FIG. 7** may be a sleeve so that when properly mounted, an electrical stress grading composition **150** will be adjacent to and/or cover a terminal edge of the semiconductor layers **130a** and **130b.** In some embodiments, the electrical stress grading composition **150** may cover more or less of the semiconductor layers **130a** and **130b** and/or the polymeric insulation layers **120a** and **120b** than shown in **FIG. 8****.** In some embodiments, the electrical stress grading composition **150** may be adjacent to a geometric stress grading element (not shown) in the connection assembly **220.** When properly mounted, the Faraday cage element **230** within the elastomeric insulation layer **190** may be on and/or around the splice connection **200** and the primary electrical connectors **110a, 110b,** and optionally a portion of the the polymeric insulation layers **120a** and **120b.**

An electrical stress grading composition of the invention may be used in other electrical devices in a similar manner. For example, provided according to embodiments of the invention are electrical devices that include a medium-voltage or high-voltage conductor, a grounded conductor, an electrical stress grading composition of the invention, and an insulating material layer, wherein the electrical stress grading composition and the insulating material layer are positioned between the medium-voltage or high-voltage conductor and the grounded conductor. In some embodiments, the insulating material layer is on and/or around the medium-voltage or high voltage conductor; the electrical stress grading composition is on and/or around the insulating material layer, and the grounded conductor is on and/or around the electrical stress grading composition. Such layers may be planar, or each layer may be wrapped circumferentially or concentrically around the next in series. In addition to power cable accessories, such devices include, but are not limited to, insulators (e.g., polymeric, porcelain, or hybrid insulators), bushings, and surge arrestors. In this context, an "insulator" is a device that electrically isolates an energized power line from ground. It typically has a high voltage electrode, a grounded electrode, and insulation material such as an epoxy, porcelain, and/or rubber which provides dielectric strength between the electrodes. An electrical stress grading composition of the invention may be used, for example, around the high voltage electrodes or along internal interfaces within the insulator. In general, electrical stress grading compositions of the invention may be used as a body material or wherever a conductive component meets an insulating component that needs localized electrical stress grading.

In addition to stress grading applications, compositions of the invention may also be used in some semiconductor applications. In such semiconductor applications, the compositions may include nanoplatelets including MoS₂, hexagonal boron nitride, transition metal dichalcogenides (TMDCs), phosphorene, Xenes, or any combination thereof.

Also provided according to some embodiments of the invention are methods of forming an electrical stress grading composition that include mixing a polymer, inorganic nanoplatelets, and inorganic filler particles to form the electrical stress grading composition. The polymer, nanoplatelets, and inorganic fillers include those that are described above. In some embodiments, mixing is performed until the inorganic nanoplatelets and inorganic filler particles are suitably dispersed (e.g., uniformly dispersed). A number of different methods are known in the art and may be used to disperse the inorganic nanoplatelets and inorganic filler particles in the polymer.

### EXAMPLES

### EXAMPLE 1

Graphene nanoplatelets (GNP) were mixed with a liqud silicone rubber polymer to disperse the GNP throughout the polymer. The graphene agglomerates were broken down during a dry mixing process. The composition was mixed until the graphene was dispersed throughout the liquid silicone rubber polymer matrix.

### EXAMPLE 2

A liquid silicone rubber (LSR 7060; Momentive Performance Materials GmbH) was selected as the polymer component due to its relatively low viscosity and long pot life. Barium titanate (BTO) nanoparticles (10 nm to 2 µm) were mixed with the LSR 7060 and the dielectric constant (Dk) and the dissipation factor (loss tangent, or Df) of the compositions were measured. The Dk steadily increased from 2.7 to 7 with increased BTO loading up to 20% by volume. At low frequencies, there were minor fluctuations in dielectric constant, but such fluctuations were significantly smaller than the rise in dielectric constant with increased BTO concentration. Despite the fluctuations, the dissipation factor was less than 0.01 (1%) at all frequencies.

### EXAMPLE 3

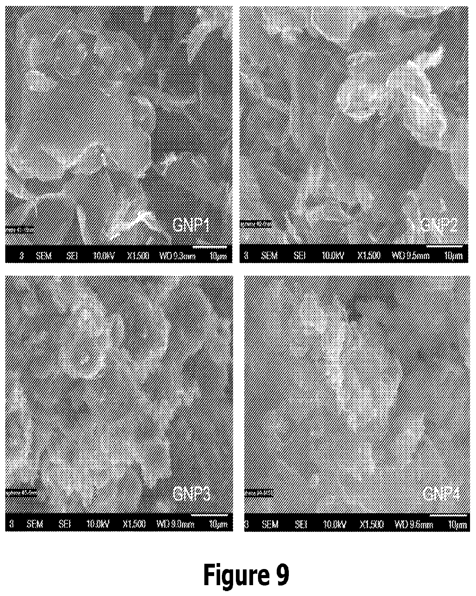

Several GNP samples were then tested. The GNP thickness ranges were 1-15 nm and the lateral dimension of the GNP was up to 15 microns. **Figure 9** provides scanning electron microscope (SEM) images of the GNP samples. The samples were designated GNP1 (11-15 nm thickness), GNP2 (6-8 nm thickness), GNP3 (1-5 nm thickness), and GNP4 (1-3 nm thickness). As can be seen in **Figure 9****,** the GNP1 sample appeared to have the largest nanoplatelet size, with a lateral dimension close to the supplier specification of 15 microns. The GNP4 also included nanoplatelets of having lateral dimensions of a micron or greater. The GNP3 sample appeared more like a powder, and the nanoplatelets lateral dimension appeared significantly less than a micron. As seen in **Figure 9****,** the GNP1 sample appeared to have the highest aspect ratio.

### EXAMPLE 4

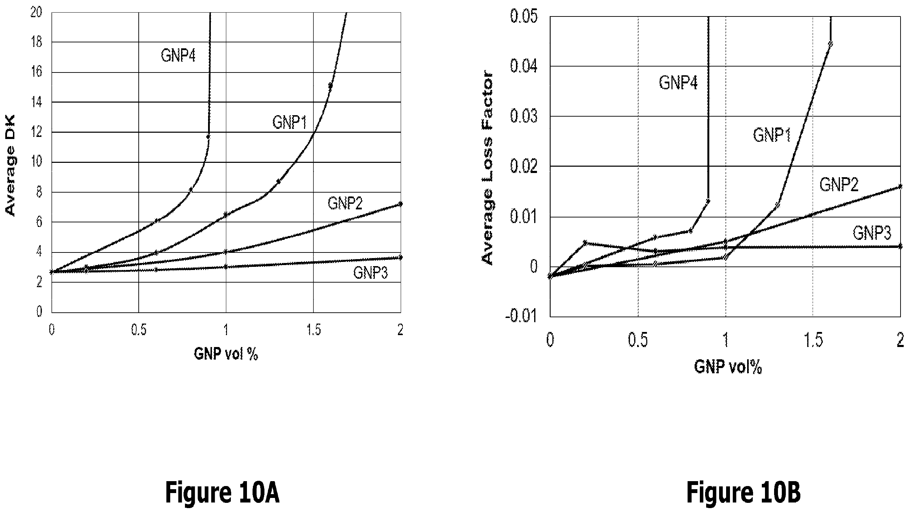

It was determined that the size and aspect ratio of the GNP significantly affected the electrical stress grading composition properties. The GNP1 sample was mixed with the LSR 7060 polymer at a range of concentrations from 0.2 vol% to 2 vol% GNP1. As seen in **Figures 10A** and **10B****,** the dielectric constant increased from 2.7 to 4 with an increase in GNP1 loading from 0 vol% to 0.6 vol% GNP1, and the dissipation factor remained low (less than 1%). The dielectric constant increased to ~6 for 1 vol% GNP1, but increased to over 100 for 2 vol% GNP1, possibly due to the formation of a conductive pathway in the samples.

The GNP3 sample was then mixed with the LSR 7060 polymer at a range of concentrations from 0.2 vol% to 2 vol% GNP3. As seen in **Figures 10A** and **10B****,** the increase in dielectric constant with the GNP3 was much less dramatic than with the GNP1 and at 2 vol% GNP3, the dielectric constant was approximately 3.8. This is counterintuitive, as a significant increase in dielectric constant for thinner (hence, higher aspect ratio) nanoplatelets would be expected. The dissipation factor was low for all GNP3 samples with concentrations up to 2 vol%, indicating that the GNP3 samples were not over the percolation threshold.

These experiments showed that the dielectric constant increased the most rapidly with concentration for the 15 nm GNP and the least rapidly for 5 nm GNP. The average dissipation factor was significantly below 10% for all samples other than the sample with 2 vol% GNP1.

Of note, the GNP4 sample was much fluffier than the other three GNP materials. This indicates that the GNP4 may be less agglomerated than the other GNP samples. Accordingly, as shown in **Figures 10A** and **10B****,** a sample of 1 vol% GNP4 in the LSR 7060 polymer was already conductive (high and inconsistent Dk and high Df), indicating it had crossed the percolation threshold. At 0.9 vol% GNP4, the average dielectric constant of the sample was 12 and the average dissipation factor was 0.8%.

### EXAMPLE 5

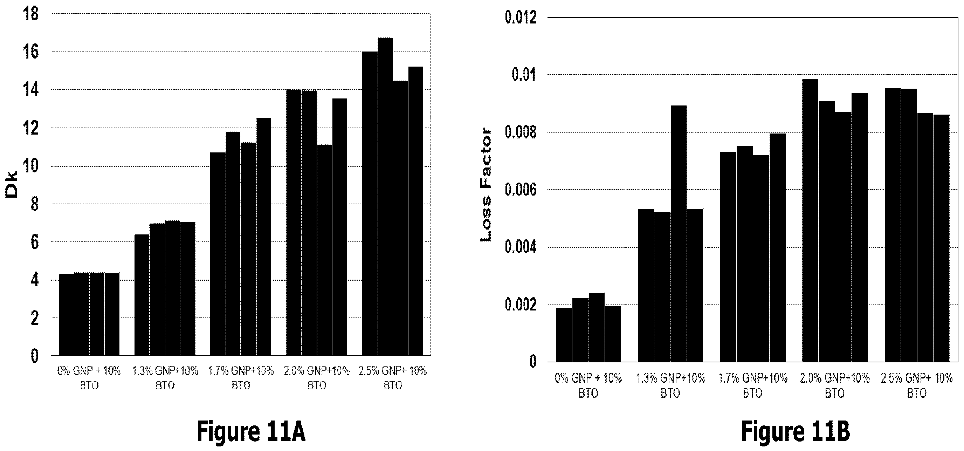

Compositions that included 10 vol% BTO filler particles, the LSR 7060 polymer, and different concentrations (vol%) of GNP1 were then formed. The volume percentages of the GNP1 and BTO filler particles were calculated relative to the entire volume of the composition. Adding the GNP enhanced the dielectric constant significantly relative to compositions that only included 10 vol% BTO in LSR 7060. As shown in **Figures 11A** and **11B****,** for 2 vol% GNP1 with 10 vol% BTO (in LSR 7060), the average dielectric constant was 13, and the average dissipation factor was 0.9% (loss factor of 0.009). Even at 2 vol% GNP1, the dissipation factor was less than 1%, indicating that the graphene percolation threshold for the three-phase mixture is higher than the two-phase composites of LSR 7060 and GNP. Dielectric breakdown strength (DBS) testing was also conducted. The breakdown voltage decreased with increasing conductive filler concentration, as expected. For pure silicone, the DBS value reported in the literature is 20 kV/mm. At 1.7 vol% GNP1 and 10 vol% BTO in LSR 7060, the estimated DBS was appoximately 5 kV/mm.

As shown in the foregoing examples, the present inventors have discovered an intercalation-type effect with the GNP/BTO system. The high aspect-ratio of the GNP (about 1,000 to about 15,000), when mixed with low-aspect-ratio BTO particles (less than about 10), became uniformly separated and distributed in the LSR matrix. Without being bound by any theory, it is believed that the low aspect-ratio BTO particles function as spacers between the GNP during mixing, and this hybrid structure promotes a uniform distribution of the fillers which allows for a high dielectric constant with a low dissipation factor.

The foregoing is illustrative of the present invention and is not to be construed as limiting thereof Although a few exemplary embodiments of this invention have been described, those skilled in the art will readily appreciate that many modifications are possible in the exemplary embodiments without materially departing from the teachings and advantages of this invention. Accordingly, all such modifications are intended to be included within the scope of this invention as defined in the claims. The invention is defined by the following claims, with equivalents of the claims to be included therein.

## Claims

1. An electrical stress grading composition comprising:
a polymer,
inorganic nanoplatelets having an aspect ratio of at least about 100, and
inorganic filler particles having a diameter in a range of about 10 nm to about 50 µm,
wherein the inorganic nanoplatelets and the inorganic filler particles are dispersed in the polymer.

2. The electrical stress grading composition of claim 1, wherein the inorganic nanoplatelets comprise at least one of graphene, graphene oxide, and functionalized graphene.

3. The electrical stress grading composition of claim 1, wherein the inorganic nanoplatelets have a thickness in a range of about 1 nm to about to 20 nm.

4. The electrical stress grading composition of claim 1, wherein the inorganic filler particles comprise SiC and/or one or more metal oxide(s), optionally wherein the one or more metal oxide(s) are selected from the group consisting of SiC, ZnO, FeO₂, TiO₂, Al₂O₃, BaTiO₃, SnO₂, SbO₂, Ba₁₋ₓSrₓTiO₃ (BST), Pb(Zr, Ti)Os (PZT), SrBi₂Ta₂O₉ (SBT), LiNbO₃ (LNO), and a combination of any of the foregoing.

5. The electrical stress grading composition of claim 4, wherein the inorganic filler particles comprise barium titanate, strontium barium titanate, a composite of barium titanate and graphene, and/or a composite of strontium barium titanate and graphene.

6. The electrical stress grading composition of claim 1, wherein the polymer is an electrically insulating polymer, optionally wherein the polymer comprises a thermoplastic polymer (e.g., a thermoplastic polyolefin), a silicone polymer (e.g., a liquid silicone rubber), an EPDM rubber, an epoxy, or any combination thereof.

7. The electrical stress grading composition of claim 1, wherein the inorganic nanoplatelets have an aspect ratio of at least about 500, at least about 1,000, or at least about 10,000.

8. The electrical stress grading composition of claim 1, wherein the inorganic nanoplatelets are present in the composition at a concentration in a range of about 0.1% to about 2% by volume of the composition.

9. The electrical stress grading composition of claim 1, wherein the inorganic filler particles are present in the composition at a concentration in a range of about 5% to about 30% (e.g., about 5% to about 20%) by volume of the composition.

10. The electrical stress grading composition of claim 1, wherein the composition has a dielectric constant in a range of about 5 to about 50 (e.g., about 5 to 20).

11. The electrical stress grading composition of claim 1, wherein the composition has a dissipation factor of less than about 70%, 60%, 50%, 40%, 30%, 20%, 10%, or 5%.

12. The electrical stress grading composition of claim 1, wherein the composition has a volume resistivity above about 1 × 10⁷ Ωcm.

13. A power cable accessory comprising:
the electrical stress grading composition (150) of claim 1.

14. The power cable accessory of claim 13, wherein the electrical stress grading composition (150) is present as a flowable conformable medium.

15. The power cable accessory of claim 13, wherein the electrical stress grading composition (150) has a modulus at 100% elongation (M100) in a range from about 0.2 MPa to about 2.0 MPa.

16. The power cable accessory of claim 13, wherein the power cable accessory includes:
a tubular electrically insulating layer (190); and
a tubular stress control layer integrally molded with the electrically insulating layer (190); and
the stress control layer is formed of the electrical stress grading composition (150).

17. An electrical device comprising:
a medium-voltage or high-voltage conductor (110);
an electrically insulating layer (120) on and/or around the medium-voltage or high-voltage conductor (110);
the electrical stress grading composition of claim 1 on and/or around the electrically insulating layer (120); and
a ground conductor on and/or around the electrical stress grading composition.
